# EUROPÄISCHE PATENTSCHRIFT

(11) **EP 0 845 168 B1**
(45) Veröffentlichungstag und Bekanntmachung des Hinweises auf die Patenterteilung: **03.11.2004**
(21) Anmeldenummer: 97930338.5
(22) Anmeldetag: 13.06.1997
(51) Int. Cl.: H02G 3/04

(54) **KABELKANALPROFIL**
CABLE CHANNEL SECTION
PROFILE POUR LE PASSAGE DE CABLES

(30) Priorität: 24.06.1996 DE 29610947 U
(43) Veröffentlichungstag der Anmeldung: 03.06.1998
(73) Patentinhaber: HILTI Aktiengesellschaft, 9494 Schaan (LI)
(72) Erfinder: MIRANDA,Giovanni, 78549 Spaichingen (DE)
(74) Vertreter: Wildi, Roland
(86) Internationale Anmeldenummer: PCT/DE1997/001245
(87) Internationale Veröffentlichungsnummer: WO 1997/050161

(56) Entgegenhaltungen:
- EP-A- 0 200 927
- EP-A- 0 389 382
- EP-A- 0 562 499
- DE-A- 2 946 841
- DE-U- 9 203 942

## Beschreibung

Die Erfindung betrifft ein Kabelkanalprofil gemäß Oberbegriff des Anspruchs 1.

Ein derartiges Kabelkanalprofil ist beispielsweise aus der DE 92 03 942 U, von der die Erfindung ausgeht, bekanntgeworden. Es besitzt mehrere Wandelemente, beispielsweise ein Boden- und zwei Seitenwandelemente, die über integral angeformte Scharnierelemente lose und unverlierbar, jedoch lösbar, miteinander verbunden sind. Die Seitenwandelemente können in Bezug auf das Bodenelement in einem vorbestimmten Winkelbereich verschwenkt und in einer Endposition durch Rastelemente fixiert werden. Die Rastelemente jeweils zweier benachbarter Wandelemente sind aufeinander abgestimmt, beispielsweise in Form eines Rasthakens, der von einem von dem Seitenwandelement abstehenden Fixierschenkel getragen ist und einem am Bodenelement vorgesehenen Rastelement in Form einer Rastnase. Damit ist es möglich, das Kabelkanalprofil in flachgelegtem Zustand platzsparend zu transportieren und am Einsatzort nach dem Anbringen des Bodenelements an einer Wand oder dergleichen durch Verschwenken und anschließendes Verrasten der Seitenwandelemente zu einem U-förmigen Kabelkanal aufzubauen. Der Kabelkanal kann abschließend durch einen aufschnappbaren Deckel verschlossen werden.

Ebenso ist es möglich, durch entsprechend gestaltete Wandelemente ein modulares Kabelkanalsystem aufzubauen, wobei die integral angeformten Scharnierelemente die Gestaltung mehrgliedriger Kabelkanäle mit voneinander getrennten Einzelschächten in Mehrfachanordnung erlauben. Von Vorteil ist hierbei, daß mit einer vergleichsweise geringen Zahl verschiedener Wandelemente Kabelkanalprofile unterschiedlicher Ausgestaltung aufgebaut werden können. Durch die Scharnierelemente ist es auch möglich, einzelne Wandelemente auszutauschen, so daß eine Erweiterung oder eine Änderung des Designs problemlos möglich ist. Die Rastelemente stellen sicher, daß die Wandelemente in ihrer vorbestimmten Endposition sicher gehalten werden.

Obwohl sich dieses Kabelkanalprofil in der Praxis bestens bewährt hat, stellten sich bei bestimmten Anwendungsfällen und unter einer Reihe von Arbeitsbedingungen Nachteile heraus, die damit zusammenhängen, daß die Rastelemente zwar eine sichere Fixierung der Wandelemente in der Endposition ermöglichen, andererseits aber teilweise sehr schwer zu betätigen sind. So zeigte es sich, daß ein enormer Zeit- und Kraftaufwand erforderlich ist, um die Wandelemente miteinander zu verrasten bzw. beim Lösen der Verbindung den Rasthaken über die korrespondierende Rastnase auszuhebeln und damit die Seitenwand zum Abklappen freizugeben. Häufig gelingt dies nur unter Inkaufnahme einer Beschädigung durch das angreifende Werkzeug, wie beispielsweise einen Schraubendreher, so daß unter ungünstigen Bedingungen eine erneute Verwendung der Seitenwand nicht mehr möglich ist.

Dieses Problem tritt insbesondere dann auf, wenn Kabelkanalprofile zu realisieren sind, bei denen Öffnungs- und Schließvorgänge vorhersehbar auch in größerem Umfang nötig werden. Als Beispiel hierfür können sogenannte Brüstungskanäle genannt werden, die zur Aufnahme elektrischer Betriebsmittel, Übertragungsmedien und Verbindungs- und Anschlußkomponenten dienen. Sie erlauben die variable Anbringung unterschiedlicher Anschlußkomponenten, wie beispielsweise Steckdosen, Anschlußdosen für Telekommuniktion und dgl., deren Position und Anordnung jeweils wechselnden Gegebenheiten angepaßt werden können. Häufig läßt außerdem das erzielbare Gesamterscheinungsbild zu wünschen übrig, insbesondere wenn bei späterer Nachrüstung von Komponenten eine neue Generation von Geräteblenden zum Einsatz kommt.

Es ist deshalb beispielsweise in der DE 29 46 841 eine Abdeckklappe für einen derartigen Brüstungskanal vorgeschlagen worden, die beabstandet zu der Ebene der Verbindungs- und Anschlußkomponenten geführt ist und somit eine ästhetisch befriedigende Lösung ergibt. Nachteilig hierbei ist jedoch, daß der Brüstungskanal aus starren Elementen aufgebaut ist, so daß beim nachträglichen Einlegen von Leitungen diese um bereits eingesetzte Gerätedosen herum eingefädelt werden müssen. Auch gestaltet sich die Bedienung des Abdeckelements nicht unproblematisch, da dieses lediglich in einen Führungsschlitz eingehängt ist. Zwar erlaubt dieser, das Abdeckelement in geöffneter Position vorübergehend zu fixieren, jedoch besteht die Gefahr, daß beim Hantieren das Abdeckelement angestoßen wird und zurückklappt. Auch kann das Abdeckelement aus dem Führungsprofil herausgleiten und herabfallen.

Ferner ist aus der EP-A-0562499 ein Kabelkanalprofil bekannt, bei dem die Boden- und Seitenelemente durch aufeinander abgestimmte Rastelemente in Form eines radial nach aussen bewegbaren Rasthakens und einer korrespondierenden Rastnut miteinander lösbar verbunden sind. Ein Lösen der Verbindung ist durch die Möglichkeit gegeben, den Rasthaken durch Wegziehen des Fixierschenkels radial zur Schamierschale aus einer Rastnut zu bewegen.

Es ist deshalb Aufgabe der Erfindung, unter Beibehaltung der Modularität des eingangs beschriebenen Kabelkanalprofils eine Lösung anzugeben, mit der ein Kabelkanal, insbesondere ein Brüstungskanal, mit verbesserter und sicherer Handhabung sowie platzsparen dem Aufbau realisierbar ist.

Gelöst wird dieses Problem mit einem Kabelkanalprofil, das die Merkmale des Anspruchs 1 aufweist. Vorteilhafte Ausgestaltungsformen der Erfindung sind durch die Merkmale der Unteransprüche angegeben.

Die Erfindung basiert auf der Idee, die Rastfunktion dadurch zu verbessern, daß die mit den Rasthaken zusammenwirkende Rastnase an einem elastisch nachgebenden Federsteg angebracht wird. Dieser ist weiterhin integral mit dem entsprechenden Wandelement geformt, stellt jedoch nunmehr ein eigenständiges Funktionselement dar. In Abkehr von der bisherigen Überlegung, die Rastnase unmittelbar am Scharnier zu realisieren, stellt dies eine erhebliche Verbesserung im Handling dar. So genügt ein vergleichsweise geringer Druck auf den Federsteg, um die Rastnase aus dem Eingriff mit dem Rasthaken zu drücken.

Auch sind die Kräfte beim Aufbau des Kabelkanals erheblich geringer, da durch die elastisch nachgebende Eigenschaft des Federstegs dieser leichter ausweichen kann, wenn der Rasthaken über die Gleitrampe der Rastnase hinweggeführt wird. Andererseits gewährleistet der Federsteg eine sichere Fixierung der Rastnase am Rasthaken.

weitere Vorteile ergeben sich bei der Fertigung, da Fertigungstoleranzen durch die elastisch nachgebende Eigenschaft des Federstegs ausgeglichen werden können.

Am Federsteg ist eine Widerlagernase angeformt, die sich an dem benachbarten Wandelement abstützt und somit die Rastnase gegen den Rasthaken des Wandelements verspannt.

Zur Erzichungeines platzsparenden Aufbaus ist der Federsteg unmittelbar benachbart zum Scharnierelement angeordnet. Der erzielbare Einbauquerschnitt ist auf diese Weise optimal zu gestalten, da die Rastfunktion lediglich auf den Bereich in der Umgebung der Scharnierelemente beschränkt ist.

Optimal unter diesem Aspekt ist die Gestaltung des Federstegs derart, daß er zumindest angenähert tangential in einen hohlzylindersegmentförmigen Abschnitt des Scharnierelements übergeht. Er folgt damit im Konturverlauf weitgehend der Außenkontur des Scharniers, wobei ein ausreichender Abstand als Federweg eingehalten werden muß. Andererseits schützt diese Konfiguration den Federsteg vor einer eventuellen Überbelastung, da er sich nur so weit auslenken läßt, bis er am Scharnierelement anliegt.

Diese Funktion wird weiterhin verbessert, wenn der Federsteg einen leicht gekrümmten Querschnittsverlauf besitzt, so daß er sich ggf. vollflächig an das Scharnierelement anschmiegen kann.

Weitere Verbesserungen zielen darauf ab, die Wandelemente nicht nur in einer vorgegebenen Endposition zu arretieren, sondern weitere Winkelpositionen definiert einzuhalten. Dies ist beispielsweise von besonderer Bedeutung im Zusammenhang mit den eingangs erwähnten Brüstungskanälen, bei denen das Abdeckelement in einer geöffneten Position gehalten werden muß, um beispielsweise eine Gerätedose bedienen zu können. Eine derartige Möglichkeit ist auch in anderen Anwendungsfällen von Vorteil, um beispielsweise ein Seitenwandelement zu Montagezwecken abzuklappen. Häufig ist ein vollständiges Öffnen unerwünscht, da eingelegte Leitungen leicht herausfallen können. Deshalb ist es von Vorteil, das Seitenwandelement lediglich so weit aufklappen zu können, daß die Zugänglichkeit zu dem betreffenden Kanalabschnitt möglich ist.

Zu diesem Zweck sind Arretierelemente an einem Scharnierbolzen angeformt, die mit korrespondierenden Scharnierelementen einer Scharnierschale zusammenwirken. Diese Lösung hat den entscheidenden Vorteil, daß die Arretierfunktion im Scharnierelement direkt integriert werden kann und somit kein zusätzlicher Einbauraum nötig ist.

Ein besonders einfacher konstruktiver Aufbau ergibt sich, sofern die Arretierelemente einerseits als Nut und andererseits als Nockensteg ausgebildet sind. Beispielsweise ist der Nockensteg an der Scharnierschale und die Nut am Scharnierbolzen angebracht. Im Falle der Schwenkbewegung gleitet der Nokkensteg am Scharnierbolzen entlang und wird infolge elastischer Deformationskräfte im Scharnierbereich in die Nut des Scharnierbolzens hineingedrückt. Durch entsprechende Abrundungen ist sichergestellt, daß das Ein- und Ausrasten mit vergleichsweise geringem Kraftaufwand möglich ist, andererseits jedoch eine sichere Arretierung erlaubt.

Darüber hinaus kann durch eine Mehrfachanordnung von Arretiexelementen, insbesondere der Nut, eine Mehrfacharretierung in verschiedenen Winkelpositionen erreicht werden.

Ein dieses Prinzip zunutze machender Brüstungskanal besitzt in einer Minimalkonfiguration ein U-förmiges Grundprofil, wobei die wandelemente als Bodenelement mit zwei über Scharniere verbundenen Seitenwandelementen ausgeführt ist, und ein Abdeckelement über ein eingangs geschildertes Scharnier angebracht ist.

Bevorzugt tragen die Wandelemente endseitig und entgegengesetzt zum Scharnierelement ein Leistenelement, welches seinerseits über ein Scharnier mit dem entsprechenden Seitenwandelement schwenkbar verbunden ist. Damit kann es ohne Probleme aufgefaltet und über Verriegelungsorgane in einer vorbestimmten Winkelposition fixiert werden. Die Leistenelemente sind in dieser Ausführungsvariante über ein koextrudiertes Scharnier aus Weich-PVC, alternativ über ein Filmscharnier einstückig mit dem Seitenwandelement verbunden, da dieses gegenüber den eingangs beschriebenen Scharnierelementen kostengünstiger zu fertigen ist. Der modulare Austausch ist an dieser Stelle nicht erforderlich, da gewünschtenfalls das komplette Seitenwandelement ausgetauscht werden kann.

Im Falle des koextrudierten Scharniers aus Weich-PVC eröffnet sich gleichzeitig die Möglichkeit, reizvolle Farbakzente dadurch zu setzen, daß das Weich-PVC eine anderer Farbe besitzt als die Wandelemente.

Die Leistenelemente erleichtern die Zugänglichkeit zum Kabelkanal, da die Leitungen nunmehr an den ggf. vorhandenen Einbauelementen vorbeigeführt werden können. Nachinstallationen oder Veränderungen sind deshalb problemlos möglich.

Die Leistenelemente können bevorzugt Überbrückungselemente aufnehmen, die beispielsweise Halterungen für das Abdeckelement in Form der vorstehend geschilderten Scharniere·besitzen.

Weiterhin können an den Leistenelementen Abstandselemehte angebracht werden, die mit dem Abdeckelement zusammenwirken, so daß dieses im geschlossenen Zustand eine definierte Winkellage einnimmt.

Die Erfindung wird nachstehend näher anhand der in den Figuren dargestellten Ausführungsbeipiele erläutert. Es zeigen
- Figur 1: Kabelkanalprofil, flachliegend,
- Figur 2: Kabelkanalprofil gemäß Figur 1, teilweise aufgerichtet,
- Figur 3: Scharnier, vergrößert,
- Figur 4: Filmscharnier, vergrößert,
- Figur 5: Brüstungskanal,
- Figur 6: Brüstungskanal, Variante und
- Figur 7: Brüstungskanal, weitere Variante.

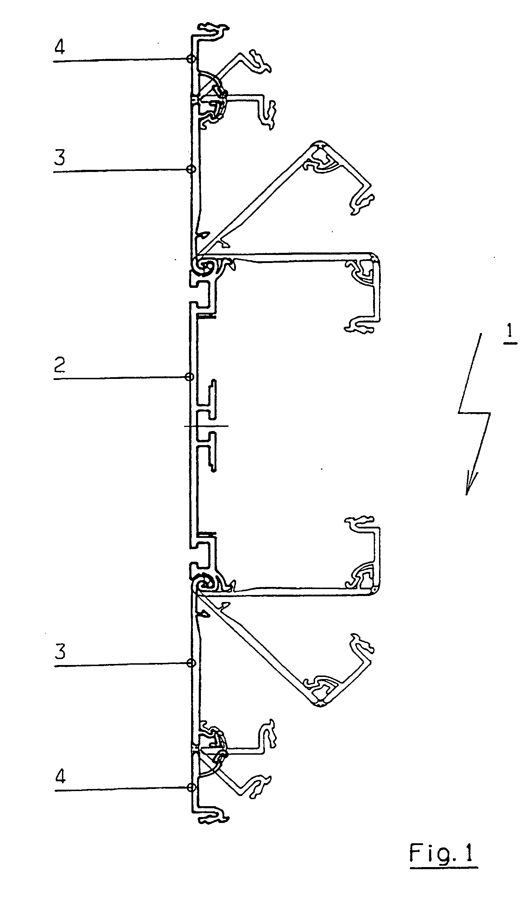

In Figur 1 ist ein Kabelkanalprofil 1 dargestellt, welches aus mehreren Wandelementen, nämlich einem Bodenelement 2, zwei Seitenwandelementen 3 sowie zwei Leistenelementen 4 aufgebaut ist. Die Darstellung zeigt die Ausgangsposition, nämlich die flachliegende Anordnung zum Zweck des Transports. Weiterhin sind in schwächerer Linienführung verschiedene Stadien erkennbar, die das Auffalten zur endgültigen Position andeuten.

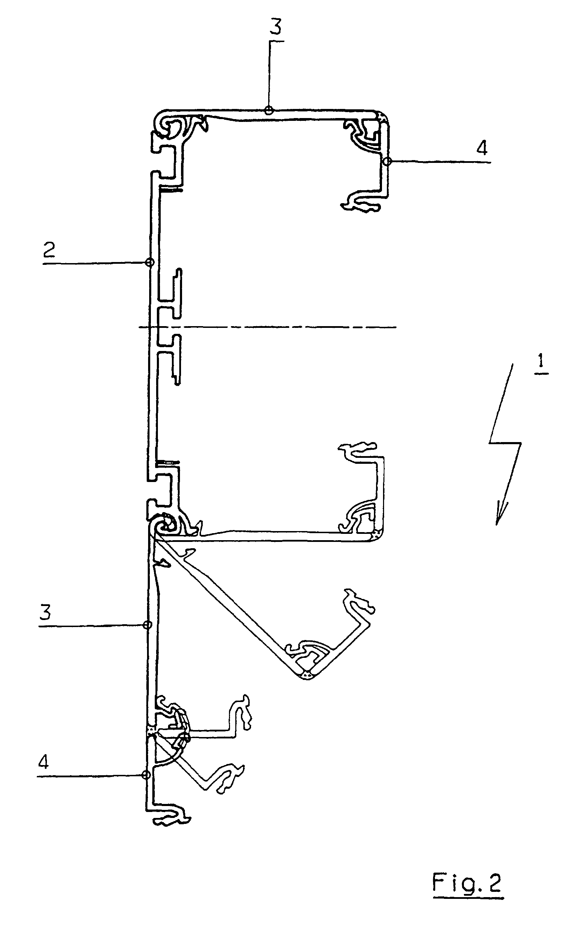

Figur 2 zeigt dasselbe Kabelkanalprofil 1, wobei im oberen Bereich bereits das Seitenwandelement 3 und das Leistenelement 4 in der Endstellung gezeigt sind. Im unteren Abschnitt ist weiterhin die Ausgangsposition dargestellt, die von weiteren, in dünner Strichführung angedeuteten Zwischen- und einer Endposition überlagert sind.

Wesentlich für die Funktion ist die Gestaltung der jeweiligen Endbereiche der Wandelemente 2, 3, 4, die einerseits die angedeutete Schwenkbewegung ermöglichen, andererseits die Fixierung in der aufgefalteten Endposition ermöglichen.

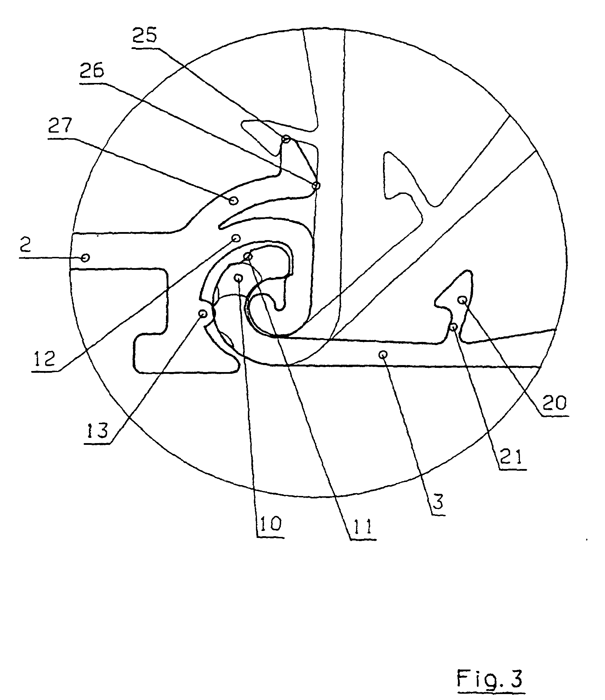

Gemäß Figur 1 und 2 sind die Seitenwandelemente 3 mit dem Bodenelement 2 über Scharniere 10, 11, 12, 13 miteinander verbunden, wie es in stark vergrößerter Darstellung in Figur 3 wiedergegeben ist.

Das Bodenelement 2 weist eine Scharnierschale 12 auf, die im wesentlichen als hohlzylinderförmiges Kreissegment geformt ist. Darin geführt ist ein am Seitenwandelement 3 angeformter Scharnierbolzen 10, der in etwa halbkreisförmig gestaltet ist. Das Seitenwandelement 3 kann somit in bezug auf das Bodenelement 2 um einen vorbestimmten Winkelbereich verschwenkt werden, nämlich ausgehend von der in starker Strichführung angedeuteten, flachgelegten Ausgangsposition zu der in dünnerer Strichführung dargestellten Endposition derart, daß das Bodenelement 2 und das Seitenwandelement 3 einen Winkel von etwa 90° einschließen. Die Ausgangsposition ist definiert durch das endseitige Anliegen des Scharnierbolzens 10 an der Scharnierschale 12, die durch einen abknickenden Querschnittsverlauf einen Endanschlag bildet.

Im aufgerichteten Zustand stützt sich das Seitenwandelement 3 von außen gegen die Scharnierschale 12 ab, die auf diese Weise die Endposition vorgibt.

In der Endposition werden das Bodenelement 2 und das Seitenwandelement 3 dadurch fixiert, daß ein Rasthaken 20, der von einem vom Seitenwandelement 3 im wesentlichen senkrecht abstehenden Fixierschenkel 21 getragen ist, mit einer Rastnase 25 in Eingriff gebracht wird. Die Rastnase 25 ist von einem Federsteg 27 getragen, der am Bodenelement 2 angebracht ist. Der Federsteg 27 trägt weiterhin eine Widerlagernase 26, die sich am Seitenwandelement 3 abstützt. Der Federsteg 27 ist unmittelbar benachbart zur Scharnierschale 12 angeordnet und geht angenähert tangential in dieses über. Der Federsteg 27 besitzt einen leicht gekrümmten Querschnittsverlauf, der dieselbe Krümmungsrichtung wie die Scharnierschale 12 aufweist, jedoch einen größeren Radius besitzt. Auf diese Weise kann der Federsteg 27 elastisch nachgebend auf die Scharnierschale 12 hin ausweichen und sich dort gegebenenfalls durch flächiges Anlegen abstützen, um im Falle einer übermäßig starken Belastung einen Bruch zu verhindern. Die federnd nachgebende Eigenschaft erleichtert den Rastvorgang, da die Rastnase 20 beim Vorbeigleiten des Rasthakens 20 zurückweichen kann, bis eine Position erreicht ist, in der die Rastnase 25 mit dem Rasthaken 20 verhakt. Gleichzeitig erfolgt eine Abstützung durch die Widerlagernase 26, die sich am Seitenwandelement 3 abstützt.

Auch das Lösen der Rastverbindung gestaltet sich weitgehend einfach, da der Federsteg 27 das Auseinanderdrücken von Rastnase 25 und Rasthaken 20 erleichtert. Damit ist die Verbindung besonders für die eingangs beschriebenen Anwendungsfälle von Vorteil, bei denen das Kabelkanalprofil häufiger geöffnet werden muß.

Ein weiteres vorteilhaftes Detail bezieht sich darauf, die Arretierung des Seitenwandelements 3 in einer teilweise geöffneten Position zu ermöglichen. Hierzu ist an der Scharnierschale 12 ein Nockensteg 13 angeformt, der mit einer im Scharnierbolzen 10 angebrachten Nut 11 zusammenwirkt. Der Nockensteg 13 ist mit etwas Vorspannung gegen den Scharnierbolzen 12 gedrückt gehalten, so daß er beim Entlanggleiten an der Scharnierschale 12 im Verlauf der Schwenkbewegung in die Nut 11 hineingedrückt wird. Vorspannung und Geometrie sind hierbei so gewählt, daß einerseits eine Schwenkbewegung des Seitenwandelements 3 möglich ist, andererseits eine ausreichende Haltekraft zur Arretierung sichergestellt ist. Weiterhin kann durch eine Mehrfachanordnung von Nuten 11 (hier nicht dargestellt) das Seitenwandelement 3 in mehreren, vorgegebenen Winkelpositionen arretiert werden, sofern dies gewünscht ist.

Das dargestellte Scharnier 10, 11, 12, 13 in Verbindung mit den Rastelementen 20, 21, 25, 26, 27 ermöglicht einen äußerst kompakten Aufbau eines Kabelkanalprofils 1, welches gegenüber bisher bekannten Lösungen eine optimale Handhabung erlaubt. Der Zusammenbau von Bodenelement 2 und Seitenwandelement 3 erfolgt durch axiales Ineinanderschieben, wodurch beide Wandelemente unverlierbar verbunden sind.

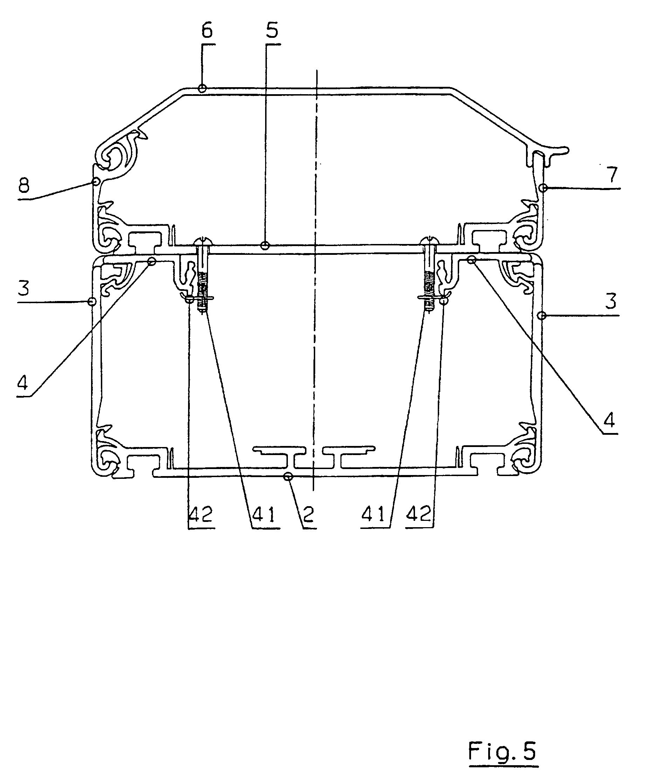

Diese Art der Scharniergestaltung ist nicht auf die Verbindung zwischen dem Bodenelement 2 und den Seitenwandelementen 3 beschränkt, sondern wird in gleicher Weise auf die ggf. weitere Elemente, wie beispielsweise auf ein Abdeckelement 6 für einen Brüstungskanal, angewendet, wie er in den Figuren 5 bis 7 dargestellt ist.

An Übergängen zu weiteren Wandelementen, wie beispielsweise den Leistenelementen 4, können auch mit Vorteil Scharniere 30, beispielsweise in Form von Filmscharnieren oder koextrudiertern Scharnieren aus Weichmaterial, zur Anwendung kommen. Diese bestehen z.B. in an sich bekannter Weise aus koextrudiertem Weich-PVC und sind deshalb besonders preisgünstig herzustellen. Sie erlauben zwar nicht den modularen Austausch der damit verbundenen Elemente, kommen aber dort zum Einsatz, wo dieser Aspekt nicht im Vordergrund steht. Im Falle des erfindungsgemäßen Kabelkanalprofils betrifft dies den Übergang von den Seitenwandelementen 3 zu den Leistenelementen 4, deren Bedeutung nachstehend noch näher erläutert wird.

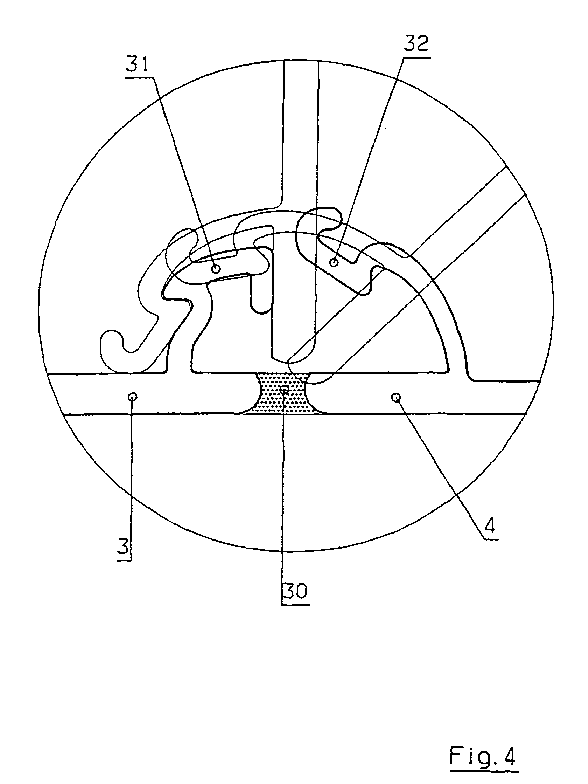

Gemäß Figur 4 sind sowohl am Seitenwandelement 3 wie auch am Leistenelement 4 Verriegelungshaken 31, 32 angeformt, die aufeinander ausgerichtet sind und beim Abklappen des Leistenelements 4 aufeinander abgleiten, so lange bis sie die ebenfalls in Figur 4 dargestellte Endposition erreicht haben, in der sie miteinander verhakt sind und gleichzeitig jeweils gegenüberliegend an den benachbarten Wandelementen 3, 4 anliegen. Hierdurch ist gleichzeitig die Endposition definiert, die im vorliegenden Beispiel 90° beträgt.

Die Verriegelungshaken 31, 32 sind ebenfalls elastisch nachgebend gestaltet, so daß sie ohne nennenswerte Kraftanstrengung wieder voneinander gelöst werden können, um das Leistenelement 4 wegzuschwenken. Die Bedeutung dieser Maßnahme ergibt sich insbesondere aus den Ausführungsvarianten eines Brüstungskanals gemäß den Figuren 5 bis 7.

Der Brüstungskanal gemäß Figur 5 übernimmt als Grundelement den in den Figuren 1 und 2 dargestellten Kabelkanal 1. Darüber hinaus ist über Schrauben 41 und Klammern 42 ein Überbrükkungselement 5 angebracht, welches sich frontseitig an den Leistenelementen 4 abstützt. Die Schrauben 41 und die Klammern 42 erlauben eine einfache Abstimmung auf an sich beliebige Grundelemente, also auch solche, die nicht erfindungsgemäß ausgebildet sind.

Das Überbrückungselement 5 ist zu beiden Seiten hin mit Abstandselementen 7, 8 verbunden, die mit einem Abdeckelement 6 zusammenwirken. Die Verbindung zwischen dem Überbrückungselement 5 und den Abstandselementen 7, 8 ist wiederum in Übereinstimmung mit den vorstehend beschriebenen Scharnierelementen 10 bis 13 ausgeführt. Ein weiteres derartiges Scharnierelement verbindet das Abstandselement 8 mit dem Abdeckelement 6, welches nach Art einer Klappe geöffnet und in geöffneter Stellung arretiert werden kann. Das untere Abstandselement 7 dient als Anschlag für das Abdeckelement 6. Es versteht sich von selbst, daß das Überbrückungselement 5 in axialer Richtung, d.h. in einer Richtung senkrecht zur Schnittebene in Figur 5, nicht durchgehend verläuft, um den Einbauraum zwischen den beiden Leistenelementen 4 im wesentlichen zugänglich zu halten.

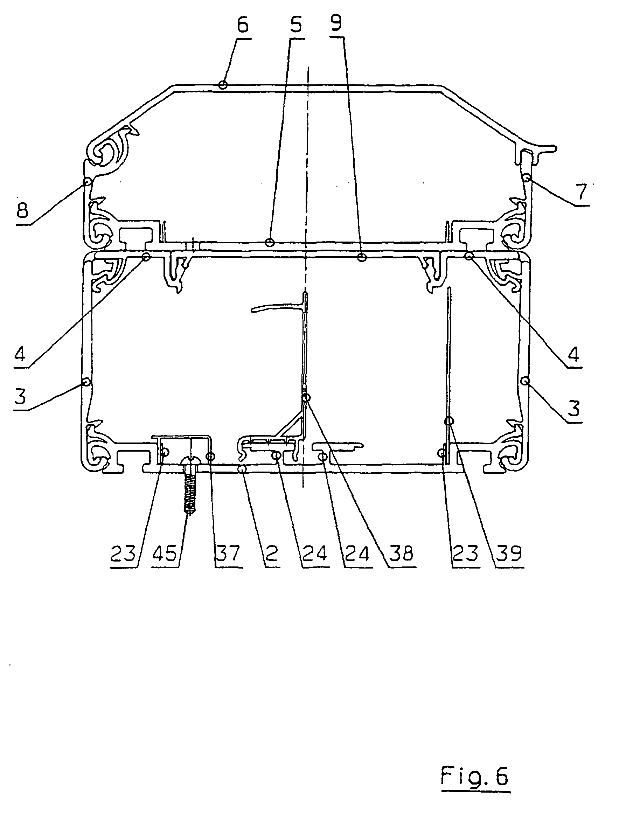

In der in Figur 6 dargestellten Variante ist der Brüstungskanal mit einer Profilwand 38 und einer Trennwand 39 bestückt, die eine Unterteilung in voneinander weitgehend getrennte Kanalabschnitte vorgeben und auf diese Weise z.B. eine getrennte Verlegung von Datenübertragungsleitungen und Stromversorgungsleitungen ermöglichen. Die Trennwand 39 ist am Bodenelement 2 durch eine Klemmlippe 23 gehalten, so daß sie lediglich in den hierdurch entstehenden Schlitz eingeschoben werden muß.

Die Profilwand 38 ist auf einen Klemmsteg 24 aufgeklipst, welcher integral mit dem Bodenelement 2 geformt ist.

Eine weitere Klemmlippe 23 kann beispielsweise zur Aufnahme einer Profilleiste 37 dienen, die eine Schraube 45 zur Befestigung des Bodenelements 2 abdeckt. Die Profilleiste 37 verhindert damit einen möglichen metallischen Kontakt zur Schraube 45.

Zwischen den beiden Leistenelementen 4 ist eine Blende 9 eingeklipst, die solche Kabelkanalabschnitte abdeckt, die nicht von Verbindungs- und Anschlußkomponenten, wie beispielsweise Anschlußdosen, besetzt sind.

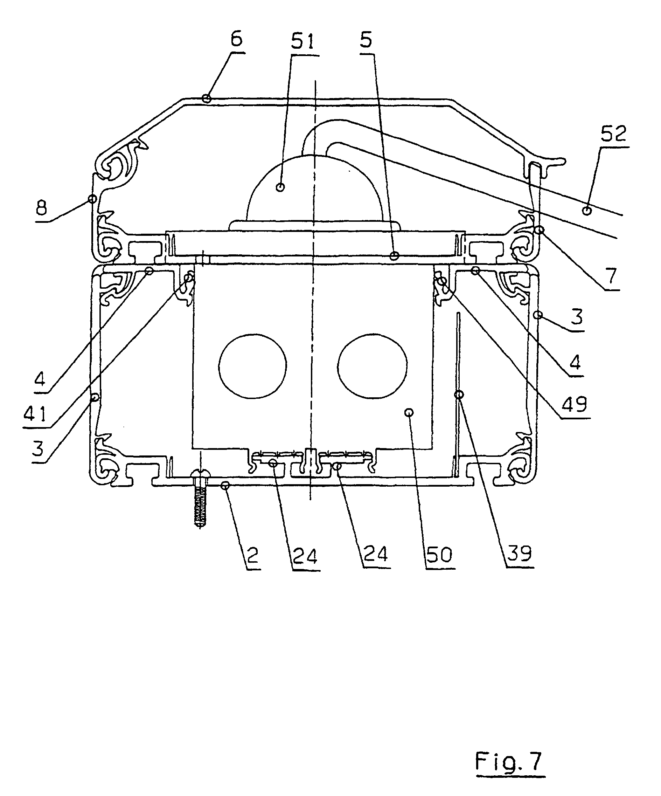

Figur 7 zeigt schließlich einen Brüstungskanal, bei dem eine Gerätedose 50 eingesetzt ist. Die Gerätedose 50 ist am Bodenelement 2 mit den Klemmstegen 24 verrastet und zwischen den beiden Leistenelementen 4 geführt. Auch ist in die Gerätedose 50 ein Stecker 51 eingeführt, dessen Anschlußleitung 52 zu einem hier nicht näher dargestellten elektrischen Verbraucher führt. Diese Darstellung zeigt, daß das Abdeckelement 6 durch die Abstandselemente 7, 8 so weit beabstandet zu den Leistenelementen 4 verläuft, daß in geschlossenem Zustand die Anschlußleitung 52 ohne Knick nach unten abgeführt werden kann, wo sie den Brüstungskanal zwischen zwei beabstandeten Abstandselementen 7 verläßt.

Aus Figur 7 ergibt sich unmittelbar der weitere Vorteil der Leistenelemente 4, die so gestaltet sind, daß Einbauelemente, wie beispielsweise die dargestellte Gerätedose 50, exakt hindurchgeführt werden können, wobei sie sich in diesem Bereich durch die an dieser Stelle vorhandenen Führungsleisten 49 abstützen können. Die Führungsleisten 49 sind hierbei in etwa U-förmig ausgebildet, so daß sie mit etwas Vorspannung gegen die Gerätedose 50 gedrückt werden können. Somit kann die Gerätedose 50 bei abgeklappten Leistenelementen 4 auf die Klemmstege 24 aufgesetzt und durch anschließendes Aufstellen der Leistenelemente 4 über die Führungsleisten 49 abgestützt werden. Gleichzeitig ist jedoch weiterhin die uneingeschränkte Zugänglichkeit zu den einzelnen Kabelkanalabschnitten möglich, da die entsprechenden Wandelemente durch Öffnen der Fixierverbindungen leicht lösbar sind.

### Bezugszeichenliste

- 1: Kabelkanalprofil
- 2: Bodenelement
- 3: Seitenwandelement
- 4: Leistenelement
- 5: Überbrückungselement
- 6: Abdeckelement
- 7: Abstandselement
- 8: Abstandselement
- 9: Blende
- 10: Scharnierbolzen
- 11: Nut
- 12: Scharnierschale
- 13: Nockensteg

- 20: Rasthaken
- 21: Fixierschenkel
- 23: Klemmlippe
- 24: Klemmsteg
- 25: Rastnase
- 26: Widerlagernase
- 27: Federsteg

- 30: Filmscharnier
- 31: Verriegelungshaken
- 32: Verriegelungshaken
- 37: Profilleiste
- 38: Profilwand
- 39: Trennwand

- 41: Schraube
- 45: Schraube
- 49: Führungsleiste

- 50: Gerätedose
- 51: Stecker
- 52: Anschlußleitung

## Patentansprüche

1. Kabelkanalprofil mit mehreren Wandelementen (2, 3, 4, 5, 6), die über integral angeformte Scharnierelemente lose und unverlierbar, jedoch lösbar miteinander verbunden, sowie in einem vorbestimmten Winkelbereich verschwenkbar und in einer Endposition durch jeweils zwei aufeinander abgestimmte Rastelemente (20, 25; 31, 32) fixierbar sind, wobei das erste Rastelement als Rasthaken (20) ausgebildet ist, der von einem vom ersten Wandelement (3) abstehenden Fixierschenkel (21) getragen ist und der mit einer, durch einen Federsteg (27), an dem benachbarten zweiten Wandelement (2) angebrachten Rastnase (25) zusammenwirkt, wobei der Federsteg (27) eine Scharnierschale (12) aufweist und elastisch nachgebend, auf die unmittelbar benachbart angeordnete Scharnierschale (12) hin ausweichend ausgebildet ist, **gekennzeichnet dadurch, dass** der Federsteg eine angeformte Widerlagernase (26) für das erste Wandelement (3) trägt.

2. Kabelkanalprofil nach Anspruch 1, **dadurch gekennzeichnet, daß** der Federsteg (27) zumindest angenähert tangential in einen hohlzylindersegmentförmigen Abschnitt des Scharnierelementes (12) übergeht.

3. Kabelkanalprof il nach einem der vorhergehenden Ansprüche, **dadurch gekennzeichnet, daß** der Federsteg (27) einen zumindest leicht gekrümmten Querschnittsverlauf besitzt.

4. Kabelkanalprofil nach einem der vorhergehenden Ansprüche, **gekennzeichnet durch** ein an einem Scharnierbolzen (10) angeformtes Arretierelement (11), das mit einem korrespondierenden Arretierelement (13) einer Scharnierschale (12) zusammenwirkt und eine Arretierung eines Wandlements (2; 3; 4) in einer von der Endposition abweichenden Winkelposition ermöglicht.

5. Kabelkanalprofil nach Anspruch 4 **dadurch gekennzeichnet, daß** die Arretierelemente als Nut (11) einerseits und Nockensteg (13) andererseits ausgebildet sind.

6. Kabelkanalprofil nach Ansprüch 4 oder 5, **gekennzeichnet durch** mehrere Arretierelemente (11, 13), die eine Arretierung in mehreren Winkelpositionen erlauben.

7. Kabelkanalprofil nach einem der vorhergehenden Ansprüche in Form eines Brüstungskanals, bestehend aus einem U-förmigen Grundprofil mit einem Bodenelment (2), zwei über Scharniere verbundene Seitenwandelemente (3) sowie einem Abdeckelement (6).

8. Kabelkanalprofil nach Anspruch 7, **dadurch gekennzeichnet, daß** an den Seitenwandelementen (3) jeweils endseitig und entgegengesetzt zum Scharnierlement (10; 12) ein Leistenelement (4) angebracht ist, das über ein Scharnier (30), vorzugsweise in Form eines koextrudierten Weichmaterials, wie beispielsweise Weich-PVC, oder Filmscharniers, mit dem Seitenwandelement (3) schwenkbar verbunden und über Verriegelungsorgane (31, 32) in einer vorbestimmten Winkelposition fixierbar, jedoch lösbar sind.

9. Kabelkanalprofil nach Anspruch 8, **gekennzeichnet durch** an den Leistenelementen (4) lösbar befestigte Überbrükkungselemente (5) zur Halterung der Abdeckelemente (6) und/oder der Abstandselemente (7, 8).

10. Kabelkanalprofil nach einem der Ansprüche 7 bis 9, **gekennzeichnet durch** an den Leistenelementen (4) angebrachte Abstandselmente (7, 8), die mit dem Abdeckelement (6) zusammenwirken.

## Claims

1. A cable conduit profile having a plurality of wall elements (2, 3, 4, 5, 6), which are joined together, by way of hinge elements integrally formed thereon, in such a way as to be movable and secure against loss, yet detachable, as well as capable of swivelling within a predetermined angular range and in each case of being fixed in an end position by means of two coordinated snap-in elements (20, 25; 31, 32), the first snap-in element taking the form of a snap-in hook (20), which is carried by a fixing member (21) projecting from the first wall element (3) and which cooperates with a snap-in lug (25) mounted, by way of a flexible arm (27), on the adjacent second wall element (2), the flexible arm (27) having a hinge shell (12) and being formed so as to deflect elastically, yielding towards the directly adjoining hinge shell (12), **characterized in that** the flexible arm (27) bears an integral abutment lug (26) for the first wall element (3).

2. A cable conduit profile according to Claim 1, **characterized in that**, at least more or less tangentially, the flexible arm (27) merges into a portion of the hinge element (12) which has the shape of a segment of a hollow cylinder.

3. A cable conduit profile according to one of the preceding claims, **characterized in that** the flexible arm (27) has a cross-sectional contour which is at least slightly curved.

4. A cable conduit profile according to one of the preceding claims, **characterized by** a locking element (11) formed on a hinge pin (10), said locking element (11) cooperating with a corresponding locking element (13) of a hinge shell (12) and enabling locking of a wall element (2; 3; 4) in an angular position which is different from the end position.

5. A cable conduit profile according to Claim 4, **characterized in that** the locking elements take the form of a groove (11) on the one hand and a cam projection (13) on the other hand.

6. A cable conduit profile according to Claim 4 or 5, **characterized by** a plurality of locking elements (11, 13), which enable locking in a plurality of angular positions.

7. A cable conduit profile according to one of the preceding claims in the form of trunking, consisting of a U-shaped basic profile having a base element (2), two side wall elements (3) connected by way of hinges, and a cover element (6).

8. A cable conduit profile according to Claim 7, **characterized in that** mounted at the end of each side wall element (3) opposite the hinge element (10; 12) is a strip element (4), which is swivel-connected to the side wall element (3) by way of a hinge (30) - said hinge preferably consisting of a co-extruded soft material, such as for instance soft PVC, or being in the form of a film hinge - and can be detachably fixed in a predetermined angular position by way of interlocking members (31, 32).

9. A cable conduit profile according to Claim 8, **characterized by** bridging elements (5), detachably fixed to the strip elements (4), for holding the cover elements (6) and/or the spacer elements (7, 8).

10. A cable conduit profile according to one of Claims 7 to 9, **characterized by** spacer elements (7, 8), which are mounted on the strip elements (4) and cooperate with the cover element (6).

## Revendications

1. Profilé de caniveau de câbles à plusieurs éléments de paroi (2, 3, 4, 5, 6) qui, par l'intermédiaire d'éléments de charnière venus de moulage, sont reliés entre eux de manière lâche et imperdable mais détachable et peuvent pivoter dans une plage angulaire prédéterminée et être bloqués dans une position extrême à chaque fois par deux éléments d'encliquetage adaptés l'un à l'autre (20, 25 ; 31, 32), le premier élément d'encliquetage étant conformé en crochet d'encliquetage (20) qui est porté par une branche de blocage (21) dépassant du premier élément de paroi (3) et qui coopère avec un talon d'encliquetage (25) disposé sur le second élément de paroi voisin (2) par l'intermédiaire d'une barrette élastique (27), la barrette élastique (27) comportant une cuvette de charnière (12) et étant conçue avec une souplesse élastique et avec une possibilité d'effacement en direction de la cuvette de charnière (12) disposée à proximité immédiate, **caractérisé en ce que** la barrette élastique porte un talon de contre-appui surmoulé (26) pour le premier élément de paroi (3).

2. Profilé de caniveau de câbles selon la revendication 1, **caractérisé en ce que** la barrette élastique (27) se prolonge de manière au moins approximativement tangentielle par une portion en forme de segment de cylindre creux de l'élément de charnière (12).

3. Profilé de caniveau de câbles selon une des revendications précédentes, **caractérisé en ce que** la barrette élastique (27) possède un tracé en coupe transversale au moins légèrement incurvé.

4. Profilé de caniveau de câbles selon une des revendications précédentes, **caractérisé par** un élément d'arrêt (11) qui est moulé dans un pivot de charnière (10) et qui coopère avec un élément d'arrêt correspondant (13) d'une cuvette de charnière (12) et permet de bloquer un élément de paroi (2 ; 3 ; 4) dans une position angulaire autre que la position extrême.

5. Profilé de caniveau de câbles selon la revendication 4, **caractérisé en ce que** les éléments d'arrêt sont conformés, d'une part, en rainure (11) et, d'autre part, en barrette de crantage (13).

6. Profilé de caniveau de câbles selon la revendication 4 ou 5, **caractérisé par** plusieurs éléments d'arrêt (11, 13) qui permettent un blocage dans plusieurs positions angulaires.

7. Profilé de caniveau de câbles selon une des revendications précédentes en forme de canal d'allège, constitué d'un profilé de base en U avec un élément de fond (2), de deux éléments formant parois latérales (3) reliés par l'intermédiaire de charnières ainsi que d'un élément de recouvrement (6).

8. Profilé de caniveau de câbles selon la revendication 7, **caractérisé en ce que** sur chacun des éléments formant parois latérales (3), à leur extrémité située à l'opposé de l'élément de charnière (10 ; 12), est disposé un élément formant barrette (4) qui, par l'intermédiaire d'une charnière (30), de préférence en forme de matière souple coextrudée, comme par exemple de PVC souple, ou de charnière-film, est relié à pivotement avec l'élément formant paroi latérale (3) et peut être bloqué, mais de manière détachable, dans une position angulaire prédéterminée par l'intermédiaire d'organes de verrouillage (31, 32).

9. Profilé de caniveau de câbles selon la revendication 8, **caractérisé par** des éléments de pontage (5) fixés de manière détachable aux éléments formant barrettes (4) pour maintenir les éléments de recouvrement (6) et/ou les éléments d'écartement (7, 8).

10. Profilé de caniveau de câbles selon une des revendications 7 à 9, **caractérisé par** des éléments d'écartement (7, 8) qui sont disposés sur les éléments formant barrettes (4) et qui coopèrent avec l'élément de recouvrement (6).
